# EUROPÄISCHE PATENTSCHRIFT

(11) **EP 2 398 705 B1**
(45) Veröffentlichungstag und Bekanntmachung des Hinweises auf die Patenterteilung: **23.04.2014**
(21) Anmeldenummer: 10701824.4
(22) Anmeldetag: 27.01.2010
(51) Int. Cl.: B64D 13/08, B64D 13/00, B64D 13/06

(54) **FLUGZEUG MIT EINER KLIMAANLAGE SOWIE VERFAHREN ZUM BETREIBEN EINER DERARTIGEN KLIMAANLAGE**
AIRCRAFT COMPRISING AN AIR CONDITIONER AND METHOD FOR OPERATING SUCH AN AIR CONDITIONER
AÉRONEF COMPRENANT UN SYSTÈME DE CLIMATISATION ET PROCÉDÉ POUR FAIRE FONCTIONNER UN TEL SYSTÈME DE CLIMATISATION

(30) Priorität: 23.02.2009 DE 102009010151; 23.02.2009 US 154497 P
(43) Veröffentlichungstag der Anmeldung: 28.12.2011
(73) Patentinhaber: Airbus Operations GmbH, 21129 Hamburg (DE)
(72) Erfinder: AL-ALI, Baker, 21129 Hamburg (DE)
(74) Vertreter: Schicker, Silvia
(86) Internationale Anmeldenummer: PCT/EP2010/000485
(87) Internationale Veröffentlichungsnummer: WO 2010/094392

(56) Entgegenhaltungen:
- WO-A2-03/067156
- DE-A1-102006 054 560
- US-A- 5 279 609
- US-A- 5 327 739
- US-A1- 2003 005 719

## Beschreibung

Die Erfindung betrifft ein Flugzeug mit einer zur Klimatisierung des Flugzeugs geeigneten Klimaanlage, die mit einer Luftentfeuchtungseinrichtung ausgestattet ist. Ferner betrifft die Erfindung ein Verfahren zum Betreiben einer derartigen Klimaanlage und ein Verfahren zum Betreiben eines Flugzeugs.

In einem modernen Passagierflugzeug bilden die Passagierkabine bzw. Teilbereiche der Passagierkabine, der Frachtraum bzw. Teilbereiche des Frachtraums, das Cockpit und die Crew-Ruheräume verschiedene Klimazonen, die sowohl im Flugbetrieb als auch im Bodenbetrieb des Flugzeugs mittels einer flugzeugeigenen Klimaanlage klimatisiert werden können. Ferner sorgt die Flugzeugklimaanlage im Flugbetrieb des Flugzeugs dafür, dass die Passagierkabine sowie zumindest Teilbereiche des Fracht-raums unter einem gegenüber dem verringerten Umgebungsdruck in Reiseflughöhe des Flugzeugs erhöhten Druck gehalten werden. Im Flugbetrieb des Flugzeugs wird der Flugzeugklimaanlage üblicherweise den Triebwerkskompressoren oder Hilfstriebwerkskompressoren entnommene, heiße und unter einem erhöhten Druck stehende Zapfluft und/oder Umgebungsluft zugeführt. Im Bodenbetrieb des Flugzeugs mit ausgeschalteten Triebwerken wird die Flugzeugklimaanlage dagegen in der Regel mit Umgebungsluft versorgt. Im Bodenbetrieb des Flugzeugs ist es ferner möglich, die verschiedenen Klimazonen des Flugzeugs mittels eines flugzeugexternen, mit dem Flugzeug verbindbaren Klimatisierungssystems zu klimatisieren. Dem flugzeugexternen Klimatisierungssystem wird ebenfalls üblicherweise Umgebungsluft zugeführt.

In den Klimaaggregaten der Flugzeugklimaanlage bzw. des flugzeugexternen Klimatisierungssystems wird die Zapfluft und/oder die Umgebungsluft auf eine gewünschte tiefe Temperatur abgekühlt. Die in den Klimaaggregaten aufbereitete Luft wird als gekühlte Frischluft in einen üblicherweise flugzeuginternen Mischer geführt, wo sie mit aus der Passagierkabine abgesaugter Rezirkulationsluft vermischt wird. Die in dem Mischer erzeugte Mischluft aus von den Klimapacks bereitgestellter kalter Frischluft und aus der Flugzeugkabine abgesaugter Rezirkulationsluft wird schließlich zur Klimatisierung der verschiedenen Klimazonen des Flugzeugs genutzt.

Um die Ansammlung von Feuchtigkeit im Inneren des Flugzeugs sowie eine Vereisung der luftführenden Leitungen der Flugzeugklimaanlage im Flugbetrieb des Flugzeugs zu verhindern, darf die dem Mischer der Flugzeugklimaanlage zugeführte Frischluft einen bestimmten Feuchtigkeitsgehalt nicht überschreiten. Da mit sinkender Lufttemperatur auch die Feuchtigkeitsaufnahmefähigkeit der Luft sinkt, wird durch die Abkühlung der Zapfluft und/oder der Umgebungsluft in den Klimaaggregaten der Flugzeugklimaanlage oder des flugzeugexternen Klimatisierungssystems eine Entfeuchtung dieser Luft erreicht. Insbesondere im Bodenbetrieb des Flugzeugs unter warmen und feuchten Umgebungsbedingungen ist jedoch häufig eine sehr starke Abkühlung der der Flugzeugklimaanlage oder dem flugzeugexternen Klimatisierungssystem zugeführten Umgebungsluft erforderlich, um eine ausreichende Luftentfeuchtung zu gewährleisten. Dies führt dazu, dass die Klimapacks der Flugzeugklimaanlage oder des flugzeugexternen Klimatisierungssystems eine sehr hohe Kühlleistung erbringen müssen, was einen hohen Primärenergieverbrauch der Flugzeugklimaanlage oder des flugzeugexternen Klimatisierungssystems zur Folge hat.

US 5,327,739 A, das als höchstliegendes Stand der Technik betrachtet wird, beschreibt ein zum Einsatz in einem elektrischen Fahrzeug vorgesehenes System zur Luftentfeuchtung, bei dem Umgebungsluft entlang einer Leitung in eine Trocknungskammer geleitet wird. Die Trocknungskammer enthält ein Trocknungsmittel. Beim Durchströmen des Trocknungsmittels verliert der Luftstrom an Luftfeuchtigkeit. In der Trocknungskammer ist eine Vorrichtung zur Regeneration des Trocknungsmittels vorgesehen, welche beispielsweise einen mit Strom betriebenen Erhitzer oder eine Vakuumerzeugungsvorrichtung aufweist.

Die Erfindung ist auf die Aufgabe gerichtet, ein Flugzeug mit einer zur Klimatisierung des Flugzeugs geeigneten Klimaanlage anzugeben, die eine energieeffiziente Entfeuchtung von der Klimaanlage zugeführter Frischluft ermöglicht. Ferner ist die Erfindung auf die Aufgabe gerichtet, ein Verfahren zum Betreiben einer derartigen Klimaanlage und ein Verfahren zum Betreiben eines Flugzeugs anzugeben.

Diese Aufgabe wird durch ein Flugzeug mit den Merkmalen des Anspruchs 1, ein Verfahren zum Betreiben einer Flugzeugklimaanlage mit den Merkmalen des Anspruch 6 und ein Verfahren zum Betreiben eines Flugzeugs mit den Merkmalen des Anspruchs 10 gelöst.

Eine Klimaanlage, die in ein erfindungsgemäßes Flugzeug oder ein nicht beanspruchtes zur Klimatisierung eines Flugzeugs im Bodenbetrieb des Flugzeugs geeignetes flugzeugexternes Klimatisierungssystem integriert sein kann, umfasst eine Frischluftleitung, die mit einem Frischlufteinlass zur Zufuhr von Frischluft in die Klimaanlage verbunden ist. Vorzugs-weise handelt es sich bei der Frischluftleitung der Klimaanlage um eine Umgebungsluftleitung, die dazu dient, Umgebungsluft in die Klimaanlage zuzuführen. Wenn die Klimaanlage zumindest teilweise in ein Flugzeug integriert ist, kann die Frischluftleitung jedoch auch von Luft durchströmt werden, die von einem flugzeugexternen Klimatisierungssystem bereitgestellt oder einem Triebwerkskompressor oder einem Hilfstriebwerkskompressor des Flugzeugs entnommen wird. Die die Frischluftleitung durchströmende Frischluft kann, gegebenenfalls auch abhängig vom Betriebszustand der Klimaanlage, Klimaaggregaten oder einem Mischer der Klimaanlage zugeführt oder direkt in einen zu klimatisierenden Flugzeugbereich, wie z.B. eine Passagierkabine oder einen Frachtraumbereich geleitet werden.

In der Frischluftleitung der Klimaanlage ist eine Sorptionseinrichtung angeordnet, die ein Sorptionsmedium zur Aufnahme von Feuchtigkeit aus der die Frischluftleitung durchströmenden Frischluft enthält. Mit anderen Worten, die Klimaanlage umfasst eine in Form einer Sorptionseinrichtung ausgebildete Entfeuchtungseinrichtung, die dazu dient, zu gewährleisten, dass die der Klimaanlage über die Frischluftleitung zugeführte Frischluft eine ausreichend geringe Luftfeuchtigkeit aufweist. Die Sorptionseinrichtung der Klimaanlage innerhalb eines Flugzeugs angeordnet, d.h. als flugzeuginterne Komponente ausgeführt. Alternativ dazu kann die nicht beanspruchte Sorptionseinrichtung jedoch auch eine nicht fest in das Flugzeug installierte Komponente sein, die lediglich bei Bedarf, beispielsweise im Bodenbetrieb des Flugzeugs, mit der Frischluftleitung einer flugzeuginternen Klimaanlage verbunden wird. Mit anderen Worten, die Sorptionseinrichtung kann auch als Komponente eines Bodenversorgungssystems des Flugzeugs ausgeführt und lediglich zur temporären Verbindung mit einer flugzeuginternen Klimaanlage vorgesehen sein.

Die Sorptionseinrichtung der Klimaanlage ist vorzugsweise als Adsorptionseinrichtung ausgeführt, die ein geeignetes Adsorptionsmedlum enthält. Wenn die Adsorptionseinrichtung, d.h. das in der Adsorptionseinrichtung enthaltene Adsorptionsmedium von feuchter Luft durchströmt wird, lagert sich die in der Luft enthaltene Feuchtigkeit auf der Oberfläche des Adsorptionsmediums an. Dadurch wird die die Adsorptionseinrichtung durchströmende Frischluft getrocknet. Das Adsorptionsmedium ist vorzugsweise ein feinporöser Stoff, beispielsweise Aktivkohle, Zeolith, Silikagel oder dergleichen.

Die Klimaanlage hat den Vorteil, dass die der Klimaanlage zugeführte Frischluft nicht länger durch Abkühlung der Frischluft in den Klimaaggregaten der Klimaanlage entfeuchtet werden muss. Dadurch kann insbesondere bei einem Betrieb der Klimaanlage unter warmen und feuchten Umgebungsbedingungen die von den Klimaaggregaten der Klimaanlage zu erbringende Kühlleistung signifikant verringert werden. Die Klimaanlage ist daher besonders energieeffizient betreibbar.

Die Sorptionseinrichtung ist dazu eingerichtet, thermisch mit einer Wärmequelle gekoppelt zu werden. Durch die thermische Kopplung mit der Wärmequelle kann dem in der Sorptionseinrichtung enthaltenen Sorptionsmedium zur Regeneration bzw. Unterstützung der Regeneration, d.h. zur Desorption von an der Oberfläche des Sorptionsmediums angelagerten Wassermolekülen Wärmeenergie zugeführt werden. Als Wärmequelle kann eine separate Heizeinrichtung eingesetzt werden. Wenn die Sorptionseinrichtung in ein Flugzeug integriert ist, wird vorzugsweise jedoch eine Wärmequelle verwendet, die ohnehin an Bord des Flugzeugs vorhanden ist und vorzugsweise zumindest im Flugbetrieb des Flugzeugs Wärme erzeugt. Beispielsweise kann eine wärmeerzeugende Komponente der Flugzeugklimaanlage, des Flugzeughydrauliksystems oder der elektronischen Systeme des Flugzeugs als Wärmequelle herangezogen werden.

Es ist eine selektive thermische Kopplung der Sorptionseinrichtung mit der Wärmequelle möglich. Diese kann durch eine entsprechende Wärmestromführung, beispielsweise mittels geeigneter Ventile oder dergleichen realisiert werden. Der Sorptionseinrichtung bzw. dem in der Sorptionseinrichtung enthaltenen Sorptionsmedium kann dann temporär Wärmeenergie zugeführt werden, wenn das in der Sorptionseinrichtung enthaltene Sorptionsmedium regeneriert werden soll. Wenn die Sorptionseinrichtung von Frischluft durchströmt, d.h. im Entfeuchtungsbetrieb betrieben wird, kann die Sorptionseinrichtung dagegen von der Wärmequelle entkoppelt werden, um den Entfeuchtungsbetrieb der Sorptionseinrichtung nicht zu stören. Eine temporäre Wärmeenergiezufuhr zu einer in ein Flugzeug integrierten Sorptionseinrichtung ist auch dann möglich, wenn die Wärmequelle lediglich im Flugbetrieb, nicht aber im Bodenbetrieb des Flugzeugs Wärmeenerige erzeugt. Die Flugbetriebsphasen des Flugzeugs können dann zur Regeneration des in der Sorptionseinrichtung enthaltenen Sorptionsmediums genutzt werden, während die Sorptionseinrichtung im Bodenbetrieb des Flugzeugs im Entfeuchtungsbetrieb betrieben werden kann.

Beim Durchströmen der Sorptionseinrichtung wird die Frischluft durch die Sorptionsenergie, die bei der Anlagerung von Luftfeuchtigkeit an dem in der Sorptionseinrichtung enthaltenen Sorptionsmedium frei wird, erwärmt. In der Frischluftleitung der Klimaanlage ist daher vorzugsweise ein Luftkühler angeordnet. Vorzugsweise ist der Luftkühler bezogen auf die Strömungsrichtung der Frischluft durch die Frischluftleitung stromabwärts der Sorptionseinrichtung in der Frischluftleitung positioniert. In dem stromabwärts der Sorptionseinrichtung in der Frischluftleitung angeordneten Luftkühler kann die beim Durchströmen der Sorptionseinrichtung erwärmte Frischluft wieder auf eine gewünschte tiefe Temperatur abgekühlt werden. Der Luftkühler kann beispielsweise in Form eines Wärmetauschers ausgebildet sein, in dem die aus der Sorptionseinrichtung austretende erwärmte Frischluft mit vergleichsweise kühler Umgebungsluft oder mit von einer anderen Kaltluftquelle bereitgestellter Kaltluft in Kontakt gebracht wird.

Die Klimaanlage kann ferner eine Frischluft-Bypassleitung umfassen, die mit einem weiteren Frischlufteinlass zur Zufuhr von Frischluft in die Klimaanlage verbunden ist. Die Frischluft-Bypassleitung kann bezogen auf die Strömungsrichtung der Frischluft durch die Frischluftleitung stromabwärts der Sorptionseinrichtung in die Frischluftleitung münden. Eine derartige ausgestaltete Klimaanlage kann beispielsweise unter warmen und feuchten Umgebungsbedingungen über die Frischluftleitung mit Frischluft versorgt werden. Bei kalten und trockenen Umgebungsbedingungen und/oder im Flugzeugbetrieb des Flugzeugs kann der Klimaanlage dagegen über die Frischluft-Bypassleitung Frischluft zugeführt werden, die nicht zur Entfeuchtung durch die Sorptionseinrichtung geführt werden muss. Ferner ist es möglich, lediglich einen Teil der der Klimaanlage zuzuführenden Frischluft über die Sorptionseinrichtung zu leiten und dort zu entfeuchten, einen anderen Teil der der Klimaanlage zuzuführenden Frischluft jedoch über die Frischluft-Bypassleitung an der Sorptionseinrichtung vorbei und im unentfeuchteten Zustand in die Klimaanlage zu leiten. Dies ermöglicht eine besonders flexible Einstellung des Feuchtigkeitsgehalts der der Klimaanlage zuzuführenden Frischluft.

Die Steuerung des Frischluftstroms aus der Frischluft-Bypassleitung und/oder einem bezogen auf die Strömungsrichtung der Frischluft durch die Frischluftleitung stromaufwärts der Mündung der Frischluft-Bypassleitung in die Frischluftleitung liegenden Abschnitt der Frischluftleitung in einen bezogen auf die Strömungsrichtung der Frischluft durch die Frischluftleitung stromabwärts der Mündung der Frischluft-Bypassleitung in die Frischluftleitung liegenden Abschnitt der Frischluftleitung kann mit Hilfe eines geeigneten Ventils erfolgen. Beispielsweise kann hier ein 3-Wegeventil zum Einsatz kommen, das im Mündungsbereich der Frischluft-Bypassleitung in die Frischluftleitung in der Frischluftleitung angeordnet ist.

In der Frischluftleitung kann eine Fördereinrichtung zur Förderung der Frischluft durch die Frischluftleitung angeordnet sein. Als Fördereinrichtung kann beispielsweise ein Gebläse oder ein Verdichter zum Einsatz kommen. Bezogen auf die Strömungsrichtung der Frischluft durch die Frischluftleitung ist die Fördereinrichtung vorzugsweise stromabwärts der Sorptionseinrichtung in der Frischluftleitung angeordnet. Wenn die Klimaanlage mit einer in die Frischluftleitung mündenden FrischluftBypassleitung versehen ist, ist die Fördereinrichtung bezogen auf die Strömungsrichtung der Frischluft durch die Frischluftleitung vorzugsweise stromabwärts der Mündung der Frischluft-Bypassleitung in die Frischluftleitung in der Frischluftleitung angeordnet, um, je nach Betriebszustand der Klimaanlage, Frischluft durch die Frischluftleitung und/oder die Frischluft-Bypassleitung zu fördern.

Bei einem erfindungsgemäßen Verfahren zum Betreiben einer Flugzeugklimaanlage wird Frischluft durch eine mit einem Frischlufteinlass verbundene Frischluftleitung geleitet. Die durch die Frischluftleitung geleitete Frischluft ist vorzugsweise Umgebungsluft. In der die Frischluftleitung durchströmenden Frischluft enthaltene Feuchtigkeit wird durch ein Sorptionsmedium aufgenommen, das in einer in der Frischluftleitung angeordneten Sorptionseinrichtung enthalten ist. Mit anderen Worten, bei dem erfindungsgemäßen Verfahren zum Betreiben einer Flugzeugklimaanlage wird der Klimaanlage zugeführte Frischluft durch eine in Form einer Sorptionseinrichtung ausgebildete Entfeuchtungseinrichtung entfeuchtet.

Bei dem erfindungsgemäßen Verfahren zum Betreiben einer Flugzeugklimaanlage wird das in einer in das Flugzeug integrierten in einem unbedruckten Flugzeugbereich angeordneten Sorptionseinrichtung enthaltene Sorptionsmedium im Flugbetrieb des Flugzeugs regeneriert, indem es dem Umgebungsdruck ausgesetzt wird, der im Flugbetrieb des Flugzeugs in der Flugzeugumgebung sowie einem unbedruckten Bereich des Flugzeugs vorherrscht.

Ferner ist die Sorptionseinrichtung thermisch mit einer Wärmequelle gekoppelt um dem in der Sorptionseinrichtung enthaltenen Sorptionsmedium zur Regeneration Wärmeenergie zuzuführen.

Die die Frischluftleitung durchströmende Frischluft wird vorzugsweise durch einen bezogen auf die Strömungsrichtung der Frischluft durch die Frischluftleitung stromabwärts der Sorptionseinrichtung in der Frischluftleitung angeordneten Luftkühler gekühlt.

Bei einer bevorzugten Ausführungsform des erfindungsgemäßen Verfahrens zum Betreiben einer Flugzeugklimaanlage wird beispielsweise im Flugbetrieb des Flugzeugs oder unter kalten und trockenen Umgebungsbedingungen Frischluft durch eine mit einem weiteren Frischlufteinlass verbundene Frischluft-Bypassleitung geleitet. Diese Frischluft wird bezogen auf die Strömungsrichtung der Frischluft durch die Frischluftleitung stromabwärts der Sorptionseinrichtung in die Frischluftleitung zugeführt und dadurch an der Sorptionseinrichtung vorbei in die Klimaanlage geleitet.

Die Frischluft wird vorzugsweise mittels einer in der Frischluftleitung angeordneten Fördereinrichtung durch die Frischluftleitung gefördert. Bei einer in ein Flugzeug integrierten Klimaanlage ist ein derartiger Betrieb der Klimaanlage insbesondere im Bodenbetrieb des Flugzeugs bei ausgeschalteten Triebwerken sinnvoll.

In einem erfindungsgemäßen Flugzeug, das mit einer oben beschriebenen Klimaanlage ausgestattet ist, ist die Sorptionseinrichtung der Klimaanlage in das Flugzeug integriert.

In dem erfindungsgemäßen Flugzeug ist eine in das Flugzeug integrierte Sorptionseinrichtung der Klimaanlage in einem unbedruckten Bereich des Flugzeugs, d.h. einem Bereich des Flugzeugs angeordnet, der im Flugbetrieb des Flugzeugs nicht von der Klimaanlage bzw. einem Druckregelsystem der Klimaanlage unter einem gegenüber dem verringerten Umgebungsdruck erhöhten Druck gehalten wird. Ferner ist die Sorptionseinrichtung der Klimaanlage dazu eingerichtet, das in der Sorptionseinrichtung enthaltene Sorptionsmaterial zur Regeneration im Flugbetrieb des Flugzeugs dem gegenüber dem Atmosphärendruck am Boden verringerten Umgebungsdruck auszusetzen. Mit anderen Worten, die Sorptionseinrichtung der Klimaanlage ist so gestaltet, dass im Flugbetrieb des Flugzeugs ein ungehinderter Druckausgleich zwischen der Sorptionseinrichtung und dem die Sorptionseinrichtung umgebenden unbedruckten Flugzeugbereich bzw. der Flugzeugumgebung möglich ist und dadurch das in der Sorptionseinrichtung enthaltene Sorptionsmedium dem im Flugbetrieb des Flugzeugs vorherrschenden verringerten Umgebungsdruck ausgesetzt wird. In einer Flughöhe von ca. 39.000 Fuß (ca. 11900 m) beträgt dieser Umgebungsdruck beispielsweise lediglich 0,2 bar. Der im Flugbetrieb des Flugzeugs vorherrschende verringerte Umgebungsdruck bewirkt, dass an der Oberfläche des Sorptionsmediums angelagerte Wassermoleküle desorbiert werden und das Sorptionsmedium dadurch regeneriert, d.h. für die erneute Anlagerung von Wassermolekülen aufbereitet wird. Auf diese Art und Weise kann das Sorptionsmedium ohne die aktive Zufuhr zusätzlicher Regenerationsenergie, d.h. passiv regeneriert werden.

In dem erfindungsgemäßen Flugzeug kann die Klimaanlage kann ferner eine Zapfluftleitung umfassen, die mit einem Triebwerkskompressor oder einem Hilfstriebwerkskompressor des Flugzeugs verbunden ist. Über die Zapfluftleitung kann der Klimaanlage unter einem erhöhten Druck stehende warme Triebwerkszapfluft zugeführt werden. Die Zapfluftleitung kann bezogen auf die Strömungsrichtung der Frischluft durch die Frischluftleitung stromabwärts der Sorptionseinrichtung in die Frischluftleitung münden. Im Flugbetrieb des Flugzeugs bzw. im Bodenbetrieb des Flugezeugs mit laufenden Triebwerken kann die Klimaanlage über die Zapfluftleitung mit Triebwerkszapfluft versorgt werden, während im Bodenbetrieb des Flugzeugs bei abgeschalteten Triebwerken eine Frischluftversorgung der Klimaanlage über die Frischluftleitung gewährleistet werden kann. Die Klimaanlage kann alternativ zu einer Frischluft-Bypassleitung mit einer Zapfluftleitung ausgestattet sein. Es ist jedoch auch möglich, die Klimaanlage sowohl mit einer Frischluft-Bypassleitung als auch mit einer Zapfluftleitung auszustatten.

Zur Steuerung der Zapfluftströmung durch die Zapfluftleitung und/oder zur Steuerung der Frischluftströmung durch einen bezogen auf die Strömungsrichtung der Frischluft durch die Frischluftleitung stromaufwärts der Mündung der Zapfluftleitung in die Frischluftleitung liegenden Abschnitt der Frischluftleitung in einen bezogen auf die Strömungsrichtung der Frischluft durch die Frischluftleitung stromabwärts der Mündung der Zapfluftleitung in die Frischluftleitung liegenden Abschnitt der Frischluftleitung kann ein geeignetes Ventil verwendet werden. Beispielsweise kann ein 3-Wegeventil zum Einsatz kommen, das im Bereich der Mündung der Zapfluftleitung in die Frischluftleitung in der Frischluftleitung angeordnet ist.

Wenn die Klimaanlage mit einer in die Frischluftleitung mündenden Frischluft-Bypassleitung versehen ist, ist eine Fördereinrichtung bezogen auf die Strömungsrichtung der Frischluft durch die Frischluftleitung, wie oben erläutert, vorzugsweise stromabwärts der Mündung der Frischluft-Bypassleitung in die Frischluftleitung in der Frischluftleitung angeordnet, um, je nach Betriebszustand der Klimaanlage, Frischluft durch die Frischluftleitung und/oder die Frischluft-Bypassleitung zu fördern. Wenn die Klimaanlage dagegen lediglich eine in die Frischluftleitung mündende Zapfluftleitung aufweist, kann die Fördereinrichtung bezogen auf die Strömungsrichtung der Frischluft durch die Frischluftleitung auch stromaufwärts der Mündung der Zapfluftleitung in die Frischluftleitung in der Frischluftleitung angeordnet sein. Beispielsweise ist eine Anordnung der Fördereinrichtung zwischen der Sorptionseinrichtung und dem Luftkühler denkbar.

Bei einem erfindungsgemäßen Verfahren zum Betreiben eines Flugzeugs wird Zapfluft durch eine mit einem Triebwerkskompressor oder einem Hilfstriebwerkskompressor des Flugzeugs verbundene Zapfluftleitung geleitet und bezogen auf die Strömungsrichtung der Frischluft durch die Frischluftleitung stromabwärts der Sorptionseinrichtung in die Frischluftleitung zugeführt werden. Die Versorgung der Klimaanlage mit Zapfluft erfolgt vorzugsweise im Flugbetrieb des Flugzeugs oder im Bodenbetrieb des Flugzeugs mit laufendem Triebwerk.

Ein zur Klimatisierung eines Flugzeugs geeignetes flugzeugexternes Klimatisierungssystem ist mit dem Flugzeug verbindbar und mit einer oben beschriebenen Klimaanlage ausgestattet. Die Sorptionseinrichtung der Klimaanlage kann als fester Bestandteil des Klimatisierungssystems ausgeführt sein. Alternativ dazu kann die Sorptionseinrichtung jedoch als lediglich temporär mit der Klimaanlage verbindbare Komponente ausgeführt sein, die nur bei Bedarf an die Klimaanlage des Klimatisierungssystems angeschlossen wird.

Bevorzugte Ausführungsbeispiele der Erfindung werden nun anhand der beigefügten schematischen Zeichnungen näher erläutert, von denen
- Figur 1: eine erste Ausführungsform einer in ein Flugzeug integrierten Klimaanlage im Bodenbetrieb des Flugzeugs zeigt,
- Figur 2: die Klimaanlage gemäß Figur 1 im Flugbetrieb des Flugzeugs zeigt,
- Figur 3: eine zweite Ausführungsform einer in ein Flugzeug integrierten Klimaanlage im Bodenbetrieb des Flugzeugs zeigt,
- Figur 4: die Klimaanlage gemäß Figur 3 im Flugbetrieb des Flugzeugs zeigt
- Figur 5: eine dritte Ausführungsform einer in ein Flugzeug integrierten Klimaanlage im Bodenbetrieb des Flugzeugs unter feuchten Umgebungsbedingungen zeigt,
- Figur 6: die Klimaanlage gemäß Figur 5 im Bodenbetrieb des Flugzeugs unter trockenen Umgebungsbedingungen zeigt,
- Figur 7: die Klimaanlage gemäß Figur 5 im Flugbetrieb des Flugzeugs zeigt, wobei die Klimaanlage mit Zapfluft versorgt wird, und
- Figur 8: die Klimaanlage gemäß Figur 5 im Flugbetrieb des Flugzeugs zeigt, wobei die Klimaanlage mit Umgebungsluft versorgt wird.

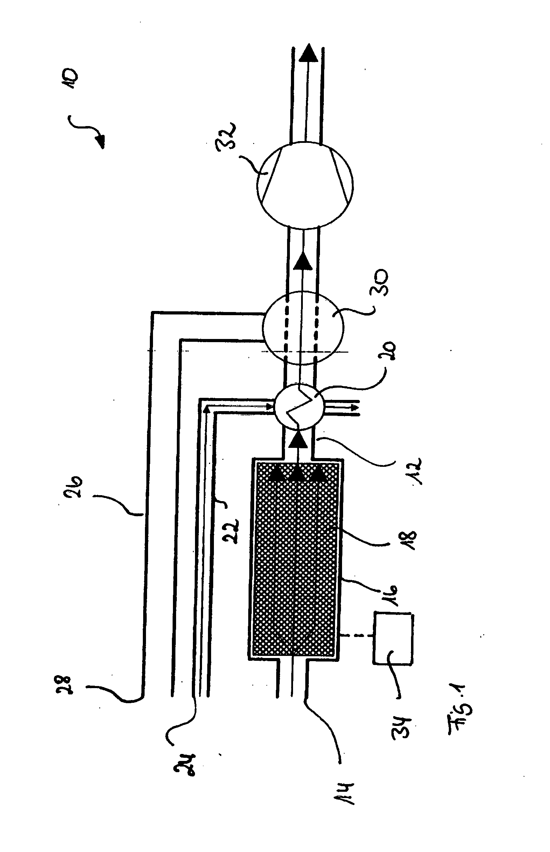

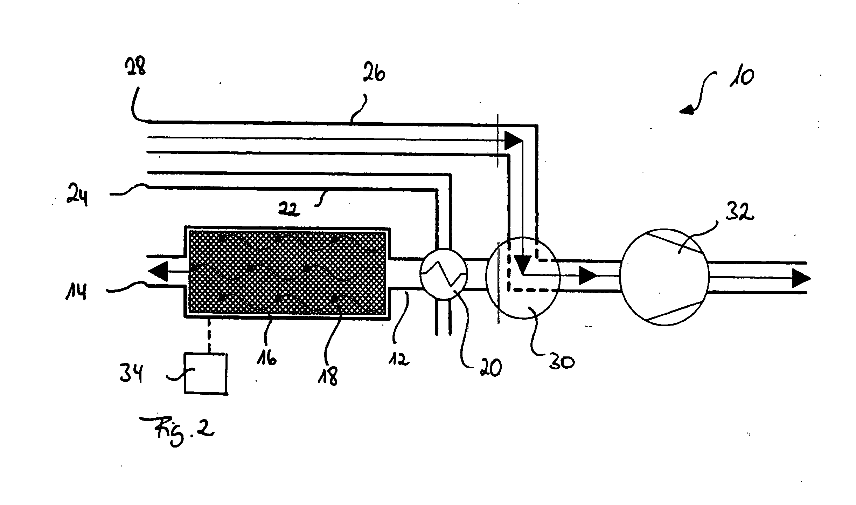

Eine in den Figuren 1 und 2 gezeigte, in ein Flugzeug integrierte Klimaanlage 10 umfasst eine Frischluftleitung 12, die mit einem im Bereich einer Flugzeugaußenhaut angeordneten Frischlufteinlass 14 verbunden ist. Durch den Frischlufteinlass 14 kann Umgebungsluft aus der Flugzeugumgebung in die Frischluftleitung 12 gefördert werden. Die die Frischluftleitung 12 durchströmende Frischluft kann, abhängig vom Betriebszustand der Klimaanlage 10, in den Figuren nicht veranschaulichten Klimaaggregaten oder einem Mischer der Klimaanlage 10 zugeführt oder direkt in einen zu klimatisierenden Flugzeugbereich, wie z.B. eine Passagierkabine oder einen Frachtraumbereich geleitet werden.

In der Frischluftleitung 12 ist bezogen auf die Strömungsrichtung der Frischluft durch die Frischluftleitung 12 stromabwärts des Frischlufteinlasses 14 eine in Form einer Adsorptionseinrichtung ausgebildete Sorptionseinrichtung 16 angeordnet. Die Sorptionseinrichtung 16 enthält ein Sorptionsmedium 18. Als Sorptionsmedium kommt ein feinporöser Stoff, beispielsweise Aktivkohle, Zeolith, Silikagel oder dergleichen zum Einsatz. Wenn über den Frischlufteinlass 14 in die Frischluftleitung 12 zugeführte Frischluft durch die Sorptionseinrichtung 16 geleitet wird, lagert sich in der Frischluft enthaltene Feuchtigkeit an der Oberfläche des in der Sorptionseinrichtung 16 enthaltenen Sorptionsmediums 18 an. Dadurch wird der Feuchtigkeitsgehalt der die Frischluftleitung 12 durchströmenden Frischluft reduziert, so dass es nicht länger erforderlich ist, die über die Frischluftleitung 12 in die Klimaanlage 10 zugeführte Frischluft durch entsprechende Abkühlung in den Klimaaggregaten der Klimaanlage 10 zu entfeuchten. Die an die Klimaaggregate der Klimaanlage 10 gestellte Kühlleistungsanforderung kann somit deutlich reduziert werden.

In der Frischluftleitung 12 ist bezogen auf die Strömungsrichtung der Frischluft durch die Frischluftleitung 12 stromabwärts der Sorptionseinrichtung 16 ein Luftkühler 20 angeordnet. Der Luftkühler 20 ist in Form eines Wärmetauschers ausgebildet und wird von Umgebungsluft durchströmt, die dem Luftkühler 20 über eine Kühlluftleitung 22 zugeführt wird. Die Kühlluftleitung 22 umfasst einen im Bereich der Flugzeugaußenhaut angeordneten Kühllufteinlass 24.

Die Klimaanlage 10 umfasst ferner eine Frischluft-Bypassleitung 26. Die Frischluft-Bypassleitung 26 ist mit einem im Bereich der Flugzeugaußenhaut angeordneten weiteren Frischlufteinlass 28 versehen und mündet bezogen auf die Strömungsrichtung der Frischluft durch die Frischluftleitung 12 stromabwärts des Luftkühlers 20 und damit auch stromabwärts der Sorptionseinrichtung 16 in die Frischluftleitung 12. Im Bereich der Mündung der Frischluft-Bypassleitung 26 in die Frischluftleitung 12 ist ein 3-Wegeventil 30 in der Frischluftleitung 12 angeordnet. Das 3-Wegeventil 30 kann, falls gewünscht, ein steuerbares Ventil mit einem variablen Strömungsquer-schnitt sein und dient der Steuerung der Zufuhr von Frischluft aus einem bezogen auf die Strömungsrichtung der Frischluft durch die Frischluftleitung 12 stromaufwärts des Ventils 30 gelegenen Abschnitt der Frischluftleitung 12 bzw. der Frischluft-Bypassleitung 26 in einen bezogen auf die Strömungsrichtung der Frischluft durch die Frischluftleitung 12 stromabwärts des Ventils 30 gelegenen Abschnitt der Frischluftleitung 12.

Schließlich ist in der Frischluftleitung 12 eine in Form eines Gebläses oder eines Verdichters ausgebildete Fördereinrichtung 32 angeordnet. Die Fördereinrichtung ist bezogen auf die Strömungsrichtung der Frischluft durch die Frischluftleitung 12 stromabwärts des Ventils 30 in der Frischluftleitung 12 positioniert und somit dazu in der Lage, sowohl über den Frischlufteinlass 14 und den stromaufwärts des Ventils 30 gelegenen Abschnitt der Frischluftleitung 12 als auch über den weiteren Frischluftein-lass 28 und die Frischluft-Bypassleitung 26 Frischluft in den stromabwärts des Ventils 30 gelegenen Abschnitt der Frischluftleitung 12 zu saugen und beispielsweise in die Klimaaggregate der Klimaanlage 10 und/oder einen zu klimatisierenden Flugzeugbereich zu fördern.

Die in den Figuren gezeigten Komponenten der Klimaanlage 10 sind in einem unbedruckten Bereich des Flugzeugs, d.h. einem Bereich des Flugzeugs angeordnet, der im Flugbetrieb des Flugzeugs nicht unter einem gegenüber dem Umgebungsdruck erhöhten Druck gehalten wird. Mit anderen Worten, in dem Flugzeugbereich, in dem die in den Figuren veranschaulichten Komponenten der Klimaanlage 10 angeordnet sind, herrscht ein Druck, der im Wesentlichen dem Druck in der Flugzeugumgebung entspricht. Ferner ist insbesondere die Sorptionseinrichtung 16 so gestaltet, dass stets ein Druckausgleich zwischen dem Inneren der Sorptionseinrichtung 16 und dem die Sorptionseinrichtung 16 umgebenden Flugzeugbereich möglich ist. Dadurch wird gewährleistet, dass das in der Sorptionseinrichtung 16 enthaltene Sorptionsmedium 18 stets dem Druck ausgesetzt ist, der auch in dem die Sorptionseinrichtung 16 aufnehmendem Flugzeugbereich vorherrscht. Da dieser Flugzeugbereich im Flugbetrieb des Flugzeugs nicht unter einem gegenüber dem Umgebungsdruck erhöhten Druck gehalten wird, ist das Sorptionsmedium somit im Flugbetrieb des Flugzeugs dem in Abhängigkeit der Flughöhe des Flugzeugs entsprechend verringertem Umgebungsdruck ausgesetzt.

Darüber hinaus ist die Sorptionseinrichtung 16 thermisch mit einer Wärmequelle 34 koppelbar. Als Wärmequelle 34 kann eine Heizeinrichtung eingesetzt werden. Vorzugsweise wird als Wärmequelle 34 jedoch eine ohnehin an Bord des Flugzeugs vorhandene Wärmequelle genutzt, die insbesondere im Flugbetrieb des Flugzeugs Wärmeenergie abgibt. Die Sorptionseinrichtung 16 kann selektiv mit der Wärmequelle 34 gekoppelt werden, so dass der Sorptionseinrichtung 16 temporär, d.h. in bestimmten Betriebssituationen Wärmeenergie von der Wärmequelle 34 zugeführt werden kann.

Im Bodenbetrieb des Flugzeugs wird, wie in Figur 1 gezeigt, mittels der Fördereinrichtung 32 Frischluft durch den Frischlufteinlass 14 in die Frischluftleitung 12 gesaugt. Die über den Frischlufteinlass 14 in die Frischluftleitung 12 zugeführte Frischluft wird durch die Sorptionseinrichtung 16 geleitet und dabei entfeuchtet. Durch die Adsorptionswärme, die bei der Adsorption des in der die Frischluftleitung 12 durchströmenden Frischluft enthaltenen Wassers an dem Sorptionsmedium 18 der Sorptionseinrichtung 16 frei wird, wird die Frischluft beim Durchströmen der Sorptionseinrichtung 16 erwärmt. Um die aus der Sorptionseinrichtung 16 austretende erwärmte Frischluft wieder auf eine gewünschte tiefe Temperatur abzukühlen, wird die Frischluft daher nach dem Durchströmen der Sorptionseinrichtung 16 durch den Luftkühler 20 geleitet. In dem Luftkühler 20 wird die Frischluft durch die Kühlenergie, die von der die Kühlluftleitung 22 durchströmenden, unkonditionierten Umgebungsluft bereitgestellt wird, wieder auf die Umgebungslufttemperatur abgekühlt.

Die Zufuhr von Frischluft über den weiteren Frischlufteinlass 28 und die Frischluft-Bypassleitung 26 wird dagegen durch das 3-Wegeventil 30 unterbunden. Der in Figur 1 veranschaulichte Betrieb der Klimaanlage 10, bei der der gesamte durch die Frischluftleitung 12 in die Klimaanlage 10 geführte Frischluftstrom durch die Sorptionseinrichtung 16 geleitet und dabei entfeuchtet wird, bietet sich insbesondere bei warmen und feuchten Umgebungsbedingungen an.

In dem in Figur 2 gezeigten Flugbetrieb des Flugzeugs wird die Klimaanlage 10 dagegen ausschließlich über den weiteren Frischlufteinlass 28 und die Frischluft-Bypassleitung 26 mit Frischluft versorgt. Zu diesem Zweck unterbricht das Ventil 30 die Verbindung zwischen dem stromaufwärts des Ventils 30 gelegenen Abschnitt der Frischluftleitung 12 und dem stromabwärts des Ventils 30 gelegenen Abschnitt der Frischluftleitung 12 und damit der Fördereinrichtung 32. Die Verbindung zwischen der Frischluft-Bypassleitung 26 und dem stromabwärts des Ventils 30 gelegenen Abschnitt der Frischluftleitung 12 und damit der Fördereinrichtung 32 wird dagegen von dem Ventil 30 freigegeben.

Da sich die in den Figuren gezeigten Komponenten der Klimaanlage 10 in einem unbedruckten Flugzeugbereich befinden, herrscht in diesem Flugzeugbereich ein von der Flughöhe abhängiger Umgebungsdruck vor. Bei einer Flughöhe von ca. 39.000 Fuß (ca. 11.900 Meter) beträgt der Umgebungsdruck in der Flugzeugumgebung und damit der Druck in dem die in den Figuren gezeigten Komponenten der Klimaanlage 10 aufnehmenden Flugzeugbereich beispielsweise ca. 0,2 bar. Infolge des auf das in der Sorptionseinrichtung 16 enthaltene Sorptionsmedium 18 wirkenden geringen Umgebungsdrucks werden an der Oberfläche des Sorptionsmediums 18 angelagerte Wassermoleküle von der Oberfläche des Sorptionsmediums 18 desorbiert und können über den Frischlufteinlass 14 in die Flugzeugumgebung abgeführt werden. Im Flugbetrieb des Flugzeugs ist somit eine passive Regeneration des in der Sorptionseinrichtung 16 enthaltenen Sorptionsmediums 18 möglich. Falls gewünscht oder erforderlich, kann die Regeneration des Sorptionsmediums 18 durch die Zufuhr von Wärmeenergie von der Wärmequelle 34 unterstützt werden. Dies kann beispielsweise vorteilhaft sein, wenn das Flugzeug zwar im Flugbetrieb, aber mit lediglich kurzen Flugzeiten betrieben wird, da die zusätzliche Zufuhr von Wärmeenergie von der Wärmequelle 34 eine Beschleunigung der Regeneration des Sorptionsmediums 18 ermöglicht. Die Zufuhr von Wärmeenergie von der Wärmequelle 34 erlaubt somit die Regeneration des Sorptionsmediums 18 auch in Fällen, in denen die Flugzeiten zu kurz sind, um eine rein passive Regeneration des Sorptionsmediums 18 zu gewährleisten. Falls es nicht möglich ist, das Sorptionsmedium 18 im Flugbetrieb des Flugzeugs passiv zu regenerieren, beispielsweise wenn das Sorptionsmedium 18 regenerationsbedürftig ist, das Flugzeug jedoch im Bodenbetrieb betrieben werden soll, kann das Sorptionsmedium 18 auch ausschließlich durch die Zufuhr von Wärmeenergie von der Wärmequelle 34 regeneriert werden.

Auch im Bodenbetrieb des Flugzeugs unter kalten und trockenen Umgebungsbedingungen kann, falls gewünscht, ein Teil der der Klimaanlage 10 zuzuführenden Frischluft über den weiteren Frischlufteinlass 28 und die Frischluft-Bypassleitung 26 in die Frischluftleitung 12 zugeführt werden. Schließlich ist bei besonders trockenen Umgebungsbedingungen auch ein Bodenbetrieb des Flugzeugs denkbar, bei dem die Frischluftzufuhr in die Frischluftleitung 12 ausschließlich über den weiteren Frischlufteinlass 28 und die Frischluft-Bypassleitung 26 erfolgt.

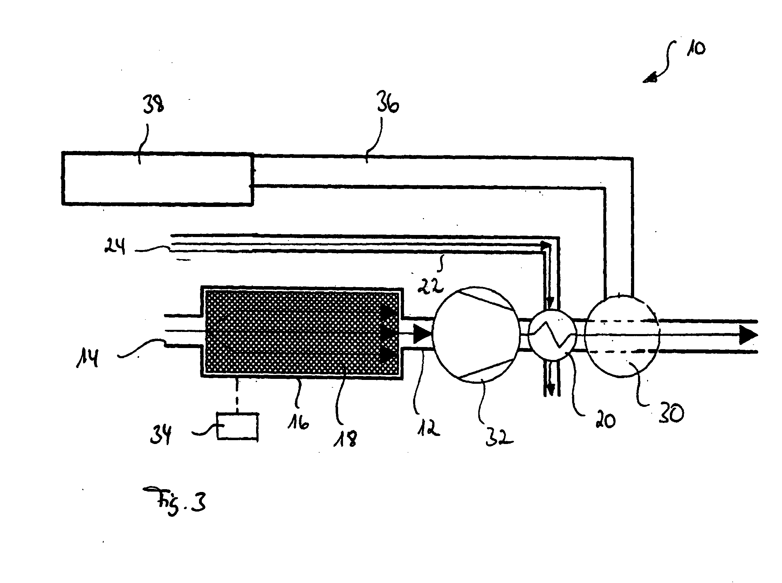

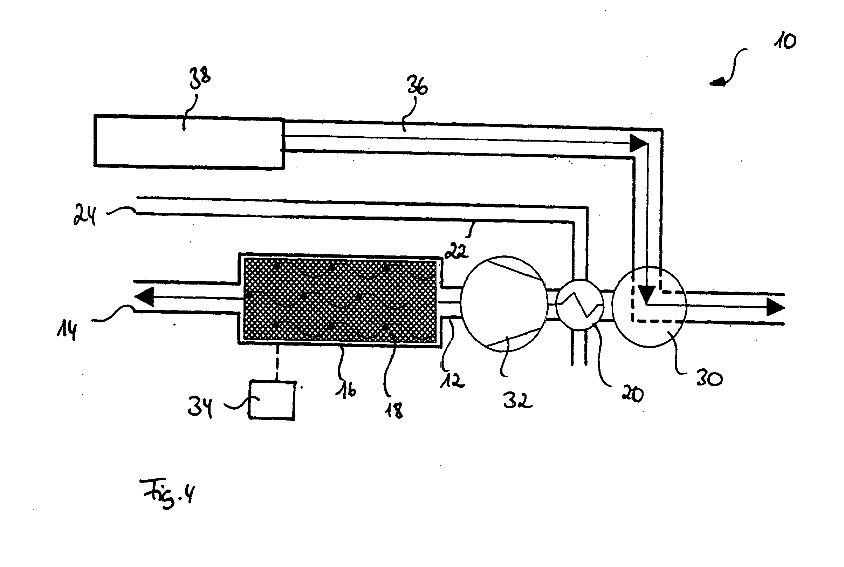

Die in den Figuren 3 und 4 gezeigte Klimaanlage 10 unterscheidet sich von der Anordnung gemäß den Figuren 1 und 2 dadurch, dass die Klimaanlage 10 nicht mit einer Frischluft-Bypassleitung, sondern mit einer Zapfluftleitung 36 versehen ist. Die Zapfluftleitung 36 ist mit einem Triebwerkskompressor 38 verbunden und mündet bezogen auf die Strömungsrichtung der Frischluft durch die Frischluftleitung 12 stromabwärts des Luftkühlers 20 und damit auch stromabwärts der Sorptionseinrichtung 16 in die Frischluftleitung 12. Ähnlich wie die bei der in den Figuren 1 und 2 veranschaulichte Anordnung dient ein im Bereich der Mündung der Zapfluftleitung 36 in die Frischluftleitung 12 angeordnetes 3-Wegeventil 30 der Steuerung der Luftzufuhr aus dem bezogen auf die Strömungsrichtung der Frischluft durch die Frischluftleitung 12 stromaufwärts des Ventils 30 liegenden Abschnitt der Frischluftleitung 12 bzw. der Zapfluftleitung 36 in den bezogen auf die Strömungsrichtung der Frischluft durch die Frischluftleitung 12 stromabwärts des Ventils 30 liegenden Abschnitt der Frischluftleitung 12.

Bei der in den Figuren 3 und 4 gezeigten Klimaanlage 10 ist die Fördereinrichtung 32 lediglich zur Förderung von Frischluft durch den Frischlufteinlass 14 in die Frischluftleitung 12 erforderlich und daher zwischen der Sorptionseinrichtung 16 und dem Luftkühler 20 in der Frischluftleitung angeordnet. Alternativ dazu könnte die Fördereinrichtung 32 auch zwischen dem Luftkühler 20 und dem Ventil 30 in der Frischluftleitung 12 positioniert werden.

Im Bodenbetrieb des Flugzeugs wird insbesondere bei abgeschalteten Triebwerken mittels der Fördereinrichtung 32 Umgebungsluft über den Frischlufteinlass 14 in die Frischluftleitung 12 gesaugt. Beim Durchströmen der Sorptionseinrichtung 16 wird die Luft entfeuchtet. Der Luftkühler 20 dient wiederum der Abkühlung der beim Durchströmen der Sorptionseinrichtung 16 erwärmten Frischluft, wobei als Kühlenergiequelle wiederum über den Kühllufteinlass 24 in die Kühlluftleitung 22 geleitete Umgebungsluft dient. Das Ventils 30 befindet sich in einer Stellung, in der es die Zapfluftleitung 36 von der Frischluftleitung 12 absperrt.

Im Flugbetrieb des Flugzeugs wird die Klimaanlage 10 dagegen über die Zapfluftleitung 36 mit Luft versorgt. Das Ventil 30 sperrt den stromaufwärts des Ventils 30 gelegenen Abschnitt der Frischluftleitung 12 von dem stromabwärts des Ventils 30 gelegenen Abschnitt der Frischluftleitung 12 ab. Wie bereits im Zusammenhang mit den Figuren 1 und 2 beschrieben, kommt es infolge des auf das Sorptionsmedium 18 der Sorptionseinrichtung 16 wirkenden geringen Umgebungsdrucks zu einer Desorption der an der Oberfläche des Sorptionsmediums 18 angelagerten Wassermoleküle und damit zu einer passiven Regeneration des Sorptionsmediums 18. Das von der Oberfläche des Sorptionsmediums 18 desorbierte Wasser kann über den Frischlufteinlass 14 in die Flugzeugumgebung abgeführt werden. Falls gewünscht oder erforderlich, kann die Regeneration des Sorptionsmediums 18 durch die Zufuhr von Wärmeenergie von der Wärmequelle 34 unterstützt werden. Ferner ist bei Bedarf, ähnlich wie bei der Anordnung gemäß den Figuren 1 und 2 eine Regeneration des Sorptionsmediums 18 ausschließlich durch die Zufuhr von Wärmeenergie von der Wärmequelle 34 möglich.

Im Bodenbetrieb des Flugzeugs mit angeschalteten Triebwerken kann das Ventil 30 in eine Stellung gebracht werden, in der es sowohl die Zufuhr von Frischluft über den stromaufwärts des Ventils 30 gelegenen Abschnitt der Frischluftleitung als auch die Zufuhr von Triebwerkszapfluft über die Zapfluftleitung 36 in den stromabwärts des Ventils 30 gelegenen Abschnitt der Frischluftleitung 12 ermöglicht. Schließlich ist im Bodenbetrieb des Flugzeugs mit angeschalteten Triebwerken auch ein Betrieb der Klimaanlage 10 möglich, bei dem das Ventil 30 den stromaufwärts des Ventils 30 gelegenen Abschnitt der Frischluftleitung 12 von dem stromabwärts des Ventils 30 gelegenen Abschnitt der Frischluftleitung 12 absperrt und die Luftzufuhr in den stromabwärts des Ventils 30 gelegenen Abschnitt der Frischluftleitung 12 ausschließlich über die Zapfluftleitung 36 erfolgt.

Im Übrigen entsprechen der Aufbau und die Funktion der in den Figuren 3 und 4 veranschaulichten Klimaanlage 10 dem Aufbau und der Funktionsweise der Anordnung gemäß den Figuren 1 und 2.

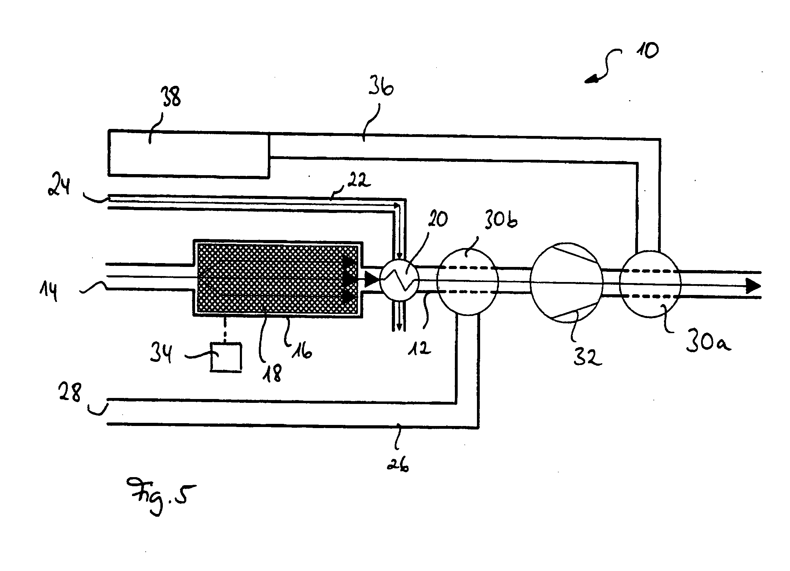

Die in den Figuren 5 bis 8 gezeigte Klimaanlage 10 unterscheidet sich von der Anordnung gemäß den Figuren 3 und 4 dadurch, dass die Klimaanlage 10 neben einer Zapfluftleitung 36 auch mit einer Frischluft-Bypassleitung 26 versehen ist. Die Zapfluftleitung 36 ist wiederum mit einem Triebwerkskompressor 38 verbunden und mündet bezogen auf die Strömungsrichtung der Frischluft durch die Frischluftleitung 12 stromabwärts der Fördereinrichtung 32 und damit auch stromabwärts der Sorptionseinrichtung 16 in die Frischluftleitung 12. Ähnlich wie die bei der in den Figuren 3 und 4 veranschaulichte Anordnung dient ein im Bereich der Mündung der Zapfluftleitung 36 in die Frischluftleitung 12 angeordnetes 3-Wegeventil 30a der Steuerung der Luftzufuhr aus dem bezogen auf die Strömungsrichtung der Frischluft durch die Frischluftleitung 12 stromaufwärts des Ventils 30a liegenden Abschnitt der Frischluftleitung 12 bzw. der Zapfluftleitung 36 in den bezogen auf die Strömungsrichtung der Frischluft durch die Frischluftleitung 12 stromabwärts des Ventils 30a liegenden Abschnitt der Frischluftleitung 12.

Die Frischluft-Bypassleitung 26 ist mit einem im Bereich der Flugzeugaußenhaut angeordneten weiteren Frischlufteinlass 28 versehen und mündet bezogen auf die Strömungsrichtung der Frischluft durch die Frischluftleitung 12 stromabwärts des Luftkühlers 20 und damit auch stromabwärts der Sorptionseinrichtung 16, aber stromaufwärts der Fördereinrichtung 32 in die Frischluftleitung 12. Im Bereich der Mündung der Frischluft-Bypassleitung 26 in die Frischluftleitung 12 ist ein 3-Wegeventil 30b in der Frischluftleitung 12 angeordnet, das der Steuerung der Zufuhr von Frischluft aus einem bezogen auf die Strömungsrichtung der Frischluft durch die Frischluftleitung 12 stromaufwärts des Ventils 30b gelegenen Abschnitt der Frischluftleitung 12 bzw. der Frischluft-Bypassleitung 26 in einen bezogen auf die Strömungsrichtung der Frischluft durch die Frischluftleitung 12 stromabwärts des Ventils 30b gelegenen Abschnitt der Frischluftleitung 12 dient.

Im Bodenbetrieb des Flugzeugs, bei abgeschalteten Triebwerken und bei feuchten Umgebungsbedingungen wird, wie in Figur 5 gezeigt, mittels der Fördereinrichtung 32 Umgebungsluft über den Frischlufteinlass 14 in die Frischluftleitung 12 gesaugt. Beim Durchströmen der Sorptionseinrichtung 16 wird die Luft entfeuchtet. Der Luftkühler 20 dient wiederum der Abkühlung der beim Durchströmen der Sorptionseinrichtung 16 erwärmten Frischluft, wobei als Kühlenergiequelle wiederum über den Kühllufteinlass 24 in die Kühlluftleitung 22 geleitete Umgebungsluft dient. Die Ventile 30a, 30b befinden sich in einer Stellung, in der sie die Zapfluftleitung 36 und die Frischluft-Bypassleitung 26 von der Frischluftleitung 12 absperren.

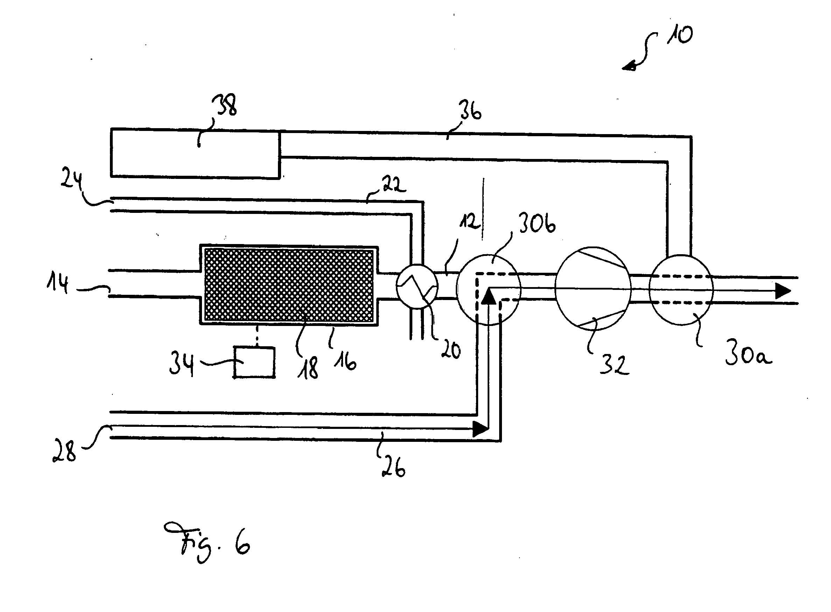

Im Bodenbetrieb des Flugzeugs, bei abgeschalteten Triebwerken, aber trockenen Umgebungsbedingungen saugt die Fördereinrichtung 32, wie in Figur 6 veranschaulicht, Umgebungsluft über den weiteren Frischlufteinlass 28 und die Frischluft-Bypassleitung 26 in die Frischluftleitung 12. Das Ventil 30b verbindet die Frischluft-Bypassleitung 26 mit der Frischluftleitung 12 und sperrt den bezogen auf die Strömungsrichtung der Frischluft durch die Frischluftleitung 12 stromaufwärts des Ventils 30b gelegenen Abschnitt der Frischluftleitung 12 von dem stromabwärts des Ventils 30b gelegenen Abschnitt der Frischluftleitung ab. Das Ventile 30a befindet sich dagegen in einer Stellung, in der es die Zapfluftleitung 36 von der Frischluftleitung 12 absperrt.

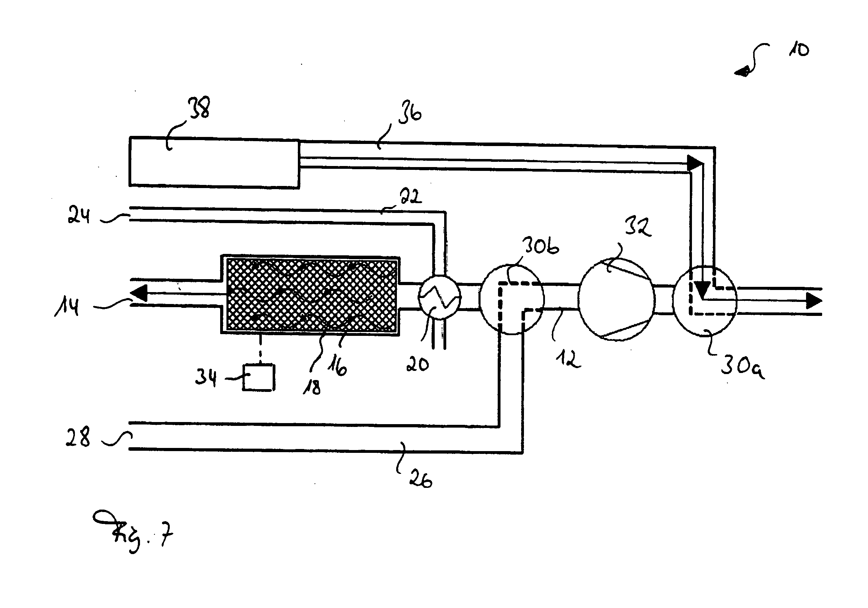

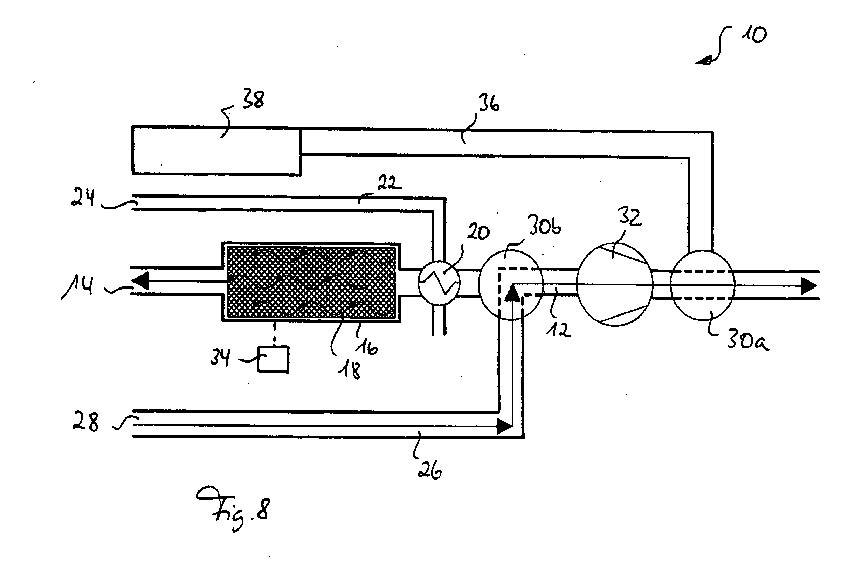

Im Flugbetrieb des Flugzeugs kann die Klimaanlage 10 entweder über die Zapfluftleitung 36 (siehe Figur 7) oder über die Frischluft-Bypassleitung 26 (siehe Figur 8) mit Luft versorgt werden. Wenn der Klimaanlage 10 über die Zapfluftleitung 36 Zapfluft zugeführt wird, verbindet das Ventil 30a die Zapfluftleitung 36 mit der Frischluftleitung 12, sperrt jedoch den stromaufwärts des Ventils 30a gelegenen Abschnitt der Frischluftleitung 12 von dem stromabwärts des Ventils 30a gelegenen Abschnitt der Frischluftleitung 12 ab. Wenn der Klimaanlage 10 dagegen über die Frischluft-Bypassleitung 26 Umgebungsluft zugeführt wird, verbindet das Ventil 30b die Frischluft-Bypassleitung 26 mit der Frischluftleitung 12, sperrt jedoch den stromaufwärts des Ventils 30b gelegenen Abschnitt der Frischluftleitung 12 von dem stromabwärts des Ventils 30b gelegenen Abschnitt der Frischluftleitung 12 ab. Das Ventil 30a befindet sich in einer Stellung, in der es die Zapfluftleitung 36 von der Frischluftleitung 12 absperrt.

Wie bereits im Zusammenhang mit den Figuren 1 bis 4 beschrieben, kommt es im Flugbetrieb des Flugzeugs infolge des auf das Sorptionsmedium 18 der Sorptionseinrichtung 16 wirkenden geringen Umgebungsdrucks zu einer Desorption der an der Oberfläche des Sorptionsmediums 18 angelagerten Wassermoleküle und damit zu einer passiven Regeneration des Sorptionsmediums 18. Das von der Oberfläche des Sorptionsmediums 18 desorbierte Wasser kann über den Frischlufteinlass 14 in die Flugzeugumgebung abgeführt werden. Falls gewünscht oder erforderlich, kann die Regeneration des Sorptionsmediums 18 durch die Zufuhr von Wärmeenergie von der Wärmequelle 34 unterstützt werden. Ferner ist bei Bedarf, ähnlich wie bei der Anordnung gemäß den Figuren 1 bis 4 eine Regeneration des Sorptionsmediums 18 ausschließlich durch die Zufuhr von Wärmeenergie von der Wärmequelle 34 möglich.

Im Übrigen entsprechen der Aufbau und die Funktion der in den Figuren 5 bis 8 veranschaulichten Klimaanlage 10 dem Aufbau und der Funktionsweise der Anordnungen gemäß den Figuren 3 bis 4.

Die Figuren 1 bis 8 zeigen jeweils eine in ein Flugzeug integrierte Klimaanlage 10. Alternativ dazu ist es jedoch auch denkbar, die Klimaanlage 10 in ein flugzeugexternes Klimatisierungssystem zu integrieren, das mit einem sich am Boden befindenden Flugzeug verbindbar ist, um zu klimatisierende Bereiche des Flugzeugs mit Klimatisationsluft zu versorgen. Die Klimaanlage 10 kann dann ohne die Zapfluftleitung 36 ausgeführt sein. Alternativ dazu ist es möglich, die Klimaanlage 10 mit einem Kompressor zur Erzeugung von Druckluft auszustatten und anstelle der Zapfluftleitung 36 eine mit dem Kompressor verbundene Druckluftleitung vorzusehen.

Ferner ist in den Figuren 1 bis 8 eine Ausführungsform der Klimaanlage 10 mit einer fest in die Klimaanlage 10 integrierten Sorptionseinrichtung 16 gezeigt. Alternativ dazu kann die Sorptionseinrichtung 16 auch als Komponente ausgebildet sein, die lediglich temporär mit der Klimaanlage 10 verbindbar ist. Eine derartig ausgeführte Sorptionseinrichtung 16 kann sowohl mit einer in ein Flugzeug integrierten Klimaanlage 10 als auch mit einer in ein flugzeugexternes Klimatisierungssystem integrierten Klimaanlage 10 verbunden werden.

## Patentansprüche

1. Flugzeug mit einer Flugzeugklimaanlage (10), welche umfasst:
- eine Frischluftleitung (12), die mit einem Frischlufteinlass (14) zur Zufuhr von Frischluft in die Klimaanlage (10) verbunden ist, und
- eine in der Frischluftleitung (12) angeordnete Sorptionseinrichtung (16), die ein Sorptionsmedium (18) zur Aufnahme von Feuchtigkeit aus der die Frischluftleitung (12) durchströmenden Frischluft enthält, wobei die Sorptionseinrichtung (16) in einem unbedruckten Flugzeugbereich angeordnet ist und dazu eingerichtet ist, das in der Sorptionseinrichtung (16) enthaltene Sorptionsmedium (18) zur Regeneration im Flugbetrieb des Flugzeugs dem Umgebungsdruck auszusetzen, und wobei die Sorptionseinrichtung (16) thermisch mit einer Wärmequelle (34) koppelbar ist, die dazu eingerichtet ist, im Flugbetrieb des Flugzeugs, während das in der Sorptionseinrichtung (16) enthaltene Sorptionsmedium (18) dem Umgebungsdruck ausgesetzt ist, dem in der Sorptionseinrichtung (16) enthaltenen Sorptionsmedium (18) zur Unterstützung der Regeneration Wärmeenergie zuzuführen.

2. Flugzeug nach Anspruch 1,
**dadurch gekennzeichnet, dass** in der Frischluftleitung (12) bezogen auf die Strömungsrichtung der Frischluft durch die Frischluftleitung (12) stromabwärts der Sorptionseinrichtung (16) ein Luftkühler (20) angeordnet ist.

3. Flugzeug nach Anspruch 1 oder 2,
**gekennzeichnet durch** eine Frischluft-Bypassleitung (26), die mit einem weiteren Frischlufteinlass (28) zur Zufuhr von Frischluft in die Klimaanlage (10) verbunden ist und bezogen auf die Strömungsrichtung der Frischluft **durch** die Frischluftleitung (12) stromabwärts der Sorptionseinrichtung (16) in die Frischluftleitung (12) mündet.

4. Flugzeug nach einem der Ansprüche 1 bis 3,
**dadurch gekennzeichnet, dass** in der Frischluftleitung (12) eine Fördereinrichtung (32) zur Förderung der Frischluft durch die Frischluftleitung (12) angeordnet ist.

5. Flugzeug nach einem der Ansprüche 1 bis 4,
**dadurch gekennzeichnet, dass** die Klimaanlage (10) eine Zapfluftleitung (36) umfasst, die mit einem Triebwerkskompressor (38) oder einem Hilfstriebwerkskompressor des Flugzeugs verbunden ist und bezogen auf die Strömungsrichtung der Frischluft durch die Frischluftleitung (12) stromabwärts der Sorptionseinrichtung (16) in die Frischluftleitung (12) mündet.

6. Verfahren zum Betreiben einer Flugzeugklimaanlage (10) mit den Schritten:
- Leiten von Frischluft durch eine mit einem Frischlufteinlass (14) verbundene Frischluftleitung (12) und
- Aufnehmen von Feuchtigkeit aus der die Frischluftleitung (12) durchströmenden Frischluft durch ein Sorptionsmedium (18), das in einer in der Frischluftleitung (12) angeordneten Sorptionseinrichtung (16) enthalten ist, wobei die Sorptionseinrichtung (16) in einem unbedruckten Flugzeugbereich angeordnet ist und das in der Sorptionseinrichtung (16) enthaltene Sorptionsmedium (18) im Flugbetrieb des Flugzeugs regeneriert wird, indem es dem Umgebungsdruck ausgesetzt wird, und wobei die Sorptionseinrichtung (16) im Flugbetrieb des Flugzeugs, während das in der Sorptionseinrichtung (16) enthaltene Sorptionsmedium (18) dem Umgebungsdruck ausgesetzt ist, thermisch mit einer Wärmequelle (34) gekoppelt wird, um dem in der Sorptionseinrichtung (16) enthaltenen Sorptionsmedium (18) zur Unterstützung der Regeneration Wärmeenergie zuzuführen.

7. Verfahren nach Anspruch 6,
**dadurch gekennzeichnet, dass** die die Frischluftleitung (12) durchströmende Frischluft durch einen bezogen auf die Strömungsrichtung der Frischluft durch die Frischluftleitung (12) stromabwärts der Sorptionseinrichtung (16) in der Frischluftleitung (12) angeordneten Luftkühler (20) gekühlt wird.

8. Verfahren nach Anspruch 6 oder 7,
**dadurch gekennzeichnet, dass** Frischluft durch eine mit einem weiteren Frischlufteinlass (28) verbundene Frischluft-Bypassleitung (26) geleitet und bezogen auf die Strömungsrichtung der Frischluft durch die Frischluftleitung (12) stromabwärts der Sorptionseinrichtung (16) in die Frischluftleitung (12) zugeführt wird.

9. Verfahren nach einem der Ansprüche 6 bis 8,
**dadurch gekennzeichnet, dass** die Frischluft mittels einer in der Frischluftleitung (12) angeordneten Fördereinrichtung (32) durch die Frischluftleitung (12) gefördert wird.

10. Verfahren zum Betreiben eines Flugzeugs nach Anspruch 5,
**dadurch gekennzeichnet, dass** Zapfluft durch eine mit einem Triebwerkskompressor (38) oder einem Hilfstriebwerkskompressor des Flugzeugs verbundene Zapfluftleitung (36) geleitet und bezogen auf die Strömungsrichtung der Frischluft durch die Frischluftleitung (12) stromabwärts der Sorptionseinrichtung (16) in die Frischluftleitung (12) zugeführt wird.

## Claims

1. Aircraft with an aircraft air conditioning system (10) comprising:
- a fresh air line (12), which is connected to a fresh air inlet (14) for supplying fresh air to the air conditioning system (10), and
- a sorption device (16), which is disposed in the fresh air line (12) and contains a sorbent (18) for taking up moisture from the fresh air flowing through the fresh air line (12), wherein the sorption device (16) is disposed in an unpressurized aircraft area and adapted to expose the sorbent (18) contained in the sorption device (16) to the ambient pressure when the aircraft is flying for the purpose of regeneration, and wherein the sorption device (16) is thermally connectable to a heat source (34) that is adapted, when the aircraft is flying, while the sorbent (18) contained in the sorption device (16) is exposed to the ambient pressure, to supply thermal energy to the sorbent (18) contained in the sorption device (16) for the purpose of assisting regeneration.

2. Aircraft according to claim 1,
**characterized in that** an air cooler (20) is disposed in the fresh air line (12), in relation to the direction of flow of the fresh air through the fresh air line (12), downstream of the sorption device (16).

3. Aircraft according to claim 1 or 2,
**characterized by** a fresh-air bypass line (26), which is connected to a further fresh air inlet (28) for supplying fresh air to the air conditioning system (10) and opens out into the fresh air line (12), in relation to the direction of flow of the fresh air through the fresh air line (12), downstream of the sorption device (16).

4. Aircraft according to any one of claims 1 to 3,
**characterized in that** a feed device (32) for feeding the fresh air through the fresh air line (12) is disposed in the fresh air line (12).

5. Aircraft according to any one of claims 1 to 4,
**characterized in that** the aircraft air conditioning system (10) comprises a bleed air line (36), which is connected to an engine compressor (38) or an auxiliary engine compressor of the aircraft and opens out into the fresh air line (12), in relation to the direction of flow of the fresh air through the fresh air line (12), downstream of the sorption device (16).

6. Method of operating an aircraft air conditioning system (10) comprising the steps:
- conveying fresh air through a fresh air line (12) connected to a fresh air inlet (14) and
- taking up moisture from the fresh air flowing through the fresh air line (12) by means of a sorbent (18), which is contained in a sorption device (16) disposed in the fresh air line (12), wherein the sorption device (16) is disposed in an unpressurized aircraft area and when the aircraft is flying the sorbent (18) contained in the sorption device (16) is regenerated in that it is exposed to the ambient pressure, and wherein when the aircraft is flying, while the sorbent (18) contained in the sorption device (16) is exposed to the ambient pressure, the sorption device (16) is thermally coupled to a heat source (34) in order to supply thermal energy to the sorbent (18) contained in the sorption device (16) for the purpose of assisting regeneration.

7. Method according to claim 6,
**characterized in that** the fresh air flowing through the fresh air line (12) is cooled by means of an air cooler (20) that is disposed in the fresh air line (12), in relation to the direction of flow of the fresh air through the fresh air line (12), downstream of the sorption device (16).

8. Method according to claim 6 or 7,
**characterized in that** fresh air is conveyed through a fresh-air bypass line (26) connected to a further fresh air inlet (28) and is supplied into the fresh air line (12), in relation to the direction of flow of the fresh air through the fresh air line (12), downstream of the sorption device (16).

9. Method according to any one of claims 6 to 8,
**characterized in that** the fresh air is fed through the fresh air line (12) by means of a feed device (32) disposed in the fresh air line (12).

10. Method of operating an aircraft according to claim 5,
**characterized in that** bleed air is conveyed through a bleed air line (36) connected to an engine compressor (38) or an auxiliary engine compressor of the aircraft and is supplied into the fresh air line (12), in relation to the direction of flow of the fresh air through the fresh air line (12), downstream of the sorption device (16).

## Revendications

1. Aéronef équipé d'un système de climatisation (10), lequel comprend :
- une conduite d'air frais (12) qui est reliée à une entrée d'air frais (14) pour amener de l'air frais au système de climatisation (10), et
- un dispositif de sorption (16) placé dans la conduite d'air frais (12) et contenant un milieu sorbant (18) pour absorber l'humidité de l'air frais circulant dans la conduite d'air frais (12), ce dispositif de sorption (16) étant placé dans une zone d'aéronef non pressurisée et conçu pour exposer à la pression environnante le milieu sorbant (18) contenu dans le dispositif sorbant (16) pour sa régénération pendant le vol de l'aéronef, et le dispositif de sorption (16) pouvant être thermiquement couplé à une source de chaleur (34) conçue pour apporter, pendant le vol de l'aéronef, lorsque le milieu sorbant (18) contenu dans le dispositif de sorption est exposé à la pression environnante, de l'énergie thermique au milieu sorbant (18) contenu dans le dispositif de sorption (16) pour en favoriser la régénération.

2. Aéronef selon la revendication 1,
**caractérisé en ce qu'**un refroidisseur d'air (20) est placé en aval du dispositif de sorption (16), par rapport au sens de circulation de l'air frais dans la conduite d'air frais (12).

3. Aéronef selon la revendication 1 ou 2,
**caractérisé par** une conduite de dérivation d'air frais (26) qui est reliée à une entrée d'air frais supplémentaire (28) pour amener de l'air frais au système de climatisation (10) et débouche dans la conduite d'air frais (12) en aval du dispositif de sorption (16), par rapport au sens de circulation de l'air frais dans la conduite d'air frais (12).

4. Aéronef selon l'une des revendications 1 à 3,
**caractérisé en ce qu'**un dispositif d'acheminement (32) servant à acheminer l'air frais à travers la conduite d'air frais (12) est placé à l'intérieur de cette dernière.

5. Aéronef selon l'une des revendications 1 à 4,
**caractérisé en ce que** le système de climatisation (10) comprend une conduite d'air de purge (36) qui est reliée à un compresseur de moteur (38) ou à un compresseur de moteur auxiliaire de l'aéronef et débouche dans la conduite d'air frais (12) en aval du dispositif de sorption (16), par rapport au sens de circulation de l'air frais dans la conduite d'air frais (12).

6. Procédé pour faire fonctionner un système de climatisation d'aéronef (10), comprenant les étapes suivantes :
- alimentation en air frais par une conduite d'air frais (12) reliée à une entrée d'air frais (14) et
- absorption d'humidité de l'air frais circulant dans la conduite d'air frais (12) par un milieu sorbant (18) qui est contenu dans un dispositif de sorption (16) placé dans la conduite d'air frais (12), le dispositif sorbant (16) étant placé dans une zone d'aéronef non pressurisée et le milieu sorbant (18) contenu dans le dispositif de sorption (16) étant régénéré pendant le vol de l'aéronef du fait de son exposition à la pression environnante, et le dispositif de sorption (16) étant, pendant le vol de l'aéronef, lorsque le milieu sorbant (18) contenu dans le dispositif de sorption (16) est exposé à la pression environnante, thermiquement couplé à une source de chaleur (34) pour délivrer de l'énergie thermique au milieu sorbant (18) contenu dans le dispositif de sorption (16) pour en favoriser la régénération.

7. Procédé selon la revendication 6,
**caractérisé en ce que** l'air frais circulant dans la conduite d'air frais (12) est refroidi à l'aide d'un refroidisseur d'air (20) placé dans la conduite d'air frais (12) en aval du dispositif de sorption (16), par rapport au sens de circulation de l'air frais dans la conduite d'air frais (12).

8. Procédé selon la revendication 6 ou 7,
**caractérisé en ce que** de l'air frais est dirigé à travers une conduite de dérivation d'air frais (26) reliée à une entrée d'air frais supplémentaire (28) et est amené à la conduite d'air frais (12) en aval du dispositif de sorption (16), par rapport au sens de circulation de l'air frais dans la conduite d'air frais (12).

9. Procédé selon l'une des revendications 6 à 8,
**caractérisé en ce que** l'air frais est acheminé à travers la conduite d'air frais (12) au moyen d'un dispositif d'acheminement (32) placé dans la conduite d'air frais (12).

10. Procédé pour faire fonctionner un aéronef selon la revendication 5,
**caractérisé en ce que** de l'air de purge est dirigé à travers une conduite d'air de purge (36) reliée à un compresseur de moteur (38) ou à un compresseur de moteur auxiliaire de l'aéronef et débouche dans la conduite d'air frais (12) en aval du dispositif de sorption (16), par rapport au sens de circulation de l'air frais dans la conduite d'air frais (12).
